# EUROPEAN PATENT APPLICATION

(11) **EP 3 139 319 A1**
(43) Date of publication of application: **08.03.2017**
(21) Application number: 16184945.0
(22) Date of filing: 19.08.2016
(51) Int. Cl.: G06Q 10/02

(54) **SERVICE PROVIDING DEVICE FOR CANCELLING TICKET, TICKET CANCEL GUIDE SYSTEM COMPRISING THE SAME, CONTROL METHOD THEREOF AND NON-TRANSITORY COMPUTER READABLE STORAGE MEDIUM HAVING COMPUTER PROGRAM RECORDED THEREON**

(30) Priority: 07.09.2015 KR 20150126306
(71) Applicant: SK Planet Co., Ltd., Seongnam-si, Gyeonggi-do 13487 (KR)
(72) Inventor: KIM, Jee Hyuk, Incheon 21457 (KR)
(74) Representative: Harden, Henry Simon

(57) **Abstract**

Provided are a service providing device for cancelling a ticket, a ticket cancel guide system including the same, a control method thereof and a non-transitory computer readable storage medium having computer program recorded thereon. That is, according to the present invention, identification information of one or more user equipment which does not enter the place associated with the ticket is verified, ticket cancel guide information is transmitted to the corresponding user equipment corresponding to the verified identification information of at least one user equipment which does not enter the corresponding place, and a cancel procedure is performed by interlocking with the service providing device and a payment server based on the ticket cancel guide information in the corresponding user equipment, and as a result, a ticket cancel function is provided to a customer who does not enter the corresponding place through easy cancel guide information and an easy menu, thereby increasing convenience of a user.

## Description

### CROSS-REFERENCE TO RELATED APPLICATION

This application claims the benefit of Korean Application No. 10-2015-0126306 filed on September 7, 2015 with the Korean Intellectual Property Office, the disclosure of which is incorporated herein by reference.

### BACKGROUND OF THE INVENTION

### 1. Field of the Invention

The present invention relates to a service providing device for cancelling a ticket, a ticket cancel guide system comprising the same, a control method thereof and a non-transitory computer readable storage medium having a computer program recorded thereon, and particularly, to a service providing device for cancelling a ticket, a ticket cancel guide system comprising the same, a control method thereof and a non-transitory computer readable storage medium having a computer program recorded thereon which collect identification information of one or more user equipment entering a place associated with a ticket, and the like through a BLE communication scheme, compare the collected identification information of one or more user equipment and identification information of one or more user equipment which purchases a ticket in association with the corresponding place, which is prestored to verify identification information of at least one user equipment which does not enter the corresponding place, transmit ticket cancel guide information to the corresponding user equipment corresponding to the identification information of at least one user equipment which does not enter the corresponding place, and perform a cancel procedure by interlocking with the service providing device and a payment server based on the ticket cancel guide information in the corresponding user equipment.

### 2. Description of the Related Art

A ticket reservation system performs reservation and payment functions for a ticket, which correspond to a date, a time, and the like when a user of corresponding user equipment is selected by interlocking between the user equipment and a ticketing system.

The ticket reservation system can perform the reservation and payment functions for the ticket corresponding to the date, the time, and the like when the user is selected and thereafter, can not determine whether the corresponding user substantially uses the corresponding ticket at a place for using the corresponding ticket.

Further, when the corresponding ticket is unused, if the corresponding user does not make a direct refund processing request for the ticket, a refund processing function for the corresponding ticket is not provided and inconvenient use is present until a refund processing procedure for the ticket is performed.

### [Prior Art Documents]

### [Patent Document]

Korean Patent Publication No. 10-2007-0068840 [Title: Reservation cancel mehtod of reservation cancel system using portable terminal and reservation cancel system]

### SUMMARY OF THE INVENTION

An object of the present invention is to provide a service providing device for cancelling a ticket, a ticket cancel guide system comprising the same, a control method thereof and a non-transitory computer readable storage medium having a computer program recorded thereon which collect identification information of one or more user equipment entering a place associated with a ticket, and the like through a BLE communication scheme, compare the collected identification information of one or more user equipment and identification information of one or more user equipment which purchases a ticket in association with the corresponding place, which is prestored to verify identification information of one or more user equipment which does not enter the corresponding place, transmit ticket cancel guide information to the corresponding user equipment corresponding to the verified identification information of at least one user equipment which does not enter the corresponding place, and perform a cancel procedure by interlocking with the service providing device and a payment server based on the ticket cancel guide information in the corresponding user equipment.

According to an aspect of the present invention, a service providing device includes: a communication unit receiving identification information of one or more user equipment, collection date and time information, place information, and identification information of an identification information collecting device with respect to user equipment which enters a place at which the identification information collecting device is positioned, which are transmitted from the identification information collecting device; a storage unit storing identification information of a plurality of user equipment which purchases a ticket in association with the place; and a control unit verifying the identification information of one or more user equipment in which the identification information of the plurality of user equipment corresponding to the place information and the collection date and time information prestored in the storage unit and the identification information of one or more user equipment transmitted from the identification information collecting device overlap with each other, verifying identification information of the residual user equipment except for the verified overlapped identification information of one or more user equipment among the identification information of the plurality of user equipment corresponding to the place information and the collection date and time information of the corresponding place prestored in the storage unit, and controlling the communication unit to transmit the ticket cancel/change guide information to be transmitted to each of at least one user equipment corresponding to the verified identification information of the user equipment which does not enter the place.

In an embodiment of the present invention, the ticket cancel/change guide information may include at least one of a place name, place specific identification information, reservation date and time information, the number of tickets, a total payment amount, payment date and time information, a payment card type, a cancel URL address for cancellation, and a change URL address for changing a reservation date associated with the ticket purchased by the user equipment.

In an embodiment of the present invention, when the cancel URL address is selected by the user equipment among the ticket cancel/change guide information transmitted to the user equipment, the control unit may perform a ticket cancel function for the ticket purchased by the user equipment by interlocking with the user equipment and a payment server.

In an embodiment of the present invention, when the change URL address is selected by the user equipment in the ticket cancel/change guide information, the control unit may perform a ticket reservation date change function for the ticket purchased by the user equipment by interlocking with the user equipment.

According to another aspect of the present invention, a control method of a service providing device includes: receiving, by a communication unit, identification information of one or more user equipment, collection date and time information, place information, and identification information of an identification information collecting device collected with respect to user equipment which enters a place at which the identification information collecting device is positioned, which are transmitted from the identification information collecting device; verifying, by a control unit, at least one user equipment which does not use a ticket purchased at a use date after purchasing the ticket in association with the place based on the received identification information of one or more user equipment, place information, and collection date and time information; generating, by the control unit, ticket cancel/change guide information corresponding to the verified user equipment which does not use the ticket purchased at the use date; and transmitting, by the communication unit, the generated ticket cancel/change guide information to the verified user equipment which does not use the ticket purchased at the use date.

In an embodiment of the present invention, the verifying of at least one user equipment which does not use the ticket purchased at the use date after purchasing the ticket may include verifying, by the control unit, the identification information of one or more user equipment in which the identification information of the plurality of user equipment corresponding to the place information and the collection date and time information prestored in the storage unit and the identification information of one or more user equipment transmitted from the identification information collecting device overlap with each other; and verifying, by the control unit, identification information of the residual user equipment except for the verified overlapped identification information of one or more user equipment among the identification information of the plurality of user equipment corresponding to the place information and the collection date and time information of the corresponding place prestored in the storage unit.

In an embodiment of the present invention, the method may further include performing, by the control unit, when a cancel URL address is selected by the user equipment in the ticket cancel/change guide information, a ticket cancel function for the ticket purchased by the user equipment by interlocking with the user equipment and a payment server; and transmitting, by the communication unit, a ticket cancel function execution result.

In an embodiment of the present invention, the ticket cancel function execution result may include at least one of a place name, place specific identification information, reservation date and time information, the number of tickets, a total payment amount, payment date and time information, a payment card type, payment cancel date and time information, a payment cancel amount, and refund scheme information.

In an embodiment of the present invention, the method may further include: performing, by the control unit, when a change URL address for changing a reservation date in the ticket cancel/change guide information is selected by the user equipment, a ticket reservation date change function for the ticket purchased by the user equipment by interlocking with the user equipment; and transmitting, by the communication unit, a ticket reservation date change function execution result, wherein the ticket reservation date change function execution result may include at least one of a place name, place specific identification information, reservation date and time information, the number of tickets, a total payment amount, payment date and time information, a payment card type, change date information, and changed reservation date and time information.

According to yet another aspect of the present invention, a computer program executing the methods according to the aforementioned embodiments may be stored in a non-transitory computer readable storage medium having a computer program recorded thereon.

According to still yet another aspect of the present invention, a ticket cancel guide system for cancelling a ticket includes: an identification information collecting device providing identification information of one or more user equipment, collection date and time information, place information, and identification information of the identification information collecting device collected with respect to user equipment which enters a place at which an identification information collecting device is positioned; a service providing device verifying the identification information of one or more user equipment in which the identification information of the plurality of user equipment corresponding to the place information and the collection date and time information which are prestored and the identification information of one or more user equipment transmitted from the identification information collecting device overlap with each other, verifying identification information of the residual user equipment except for the verified overlapped identification information of one or more user equipment among the identification information of the plurality of user equipment corresponding to the place information and the collection date and time information of the corresponding place which are prestored, and transmitting the ticket cancel/change guide information to be transmitted to each of at least one user equipment corresponding to the verified identification information of the user equipment which does not enter the place; a payment server performing a payment function or performing a payment function cancel function; and user equipment performing, when a cancel URL address included in the ticket cancel/change guide information is selected, a ticket cancel function for a purchased ticket by interlocking with the service providing device and the payment server.

According to the present invention, identification information of one or more user equipment which does not enter the place associated with the ticket is verified, ticket cancel guide information is transmitted to the corresponding user equipment corresponding to the verified identification information of at least one user equipment which does not enter the corresponding place, and a cancel procedure is performed by interlocking with the service providing device and a payment server based on the ticket cancel guide information in the corresponding user equipment, and as a result, a ticket cancel function is provided to a customer who does not enter the corresponding place through easy cancel guide information and an easy menu, thereby increasing convenience of a user.

### BRIEF DESCRIPTION OF THE DRAWINGS

FIG. 1 is a block diagram illustrating a configuration of a ticket cancel guide system according to an embodiment of the present invention.
FIG. 2 is a block diagram illustrating a configuration of user equipment according to an embodiment of the present invention.
FIG. 3 is a block diagram illustrating a configuration of a service providing device according to an embodiment of the present invention.
FIGS. 4 and 5 are flowcharts illustrating a control method of a ticket cancel guide system using BLE according to an embodiment of the present invention.
FIGS. 6 to 9 illustrate are diagrams illustrating a screen of user equipment according to an embodiment of the present invention.

### DETAILED DESCRIPTION OF THE PREFERRED EMBODIMENTS

It is noted that technical terms used in the present invention are used to just describe a specific embodiment and do not intend to limit the present invention. Further, if the technical terms used in the present invention are not particularly defined as other meanings in the present invention, the technical terms should be appreciated as meanings generally appreciated by those skilled in the art and should not be appreciated as excessively comprehensive meanings or excessively reduced meanings. Further, when the technical term used in the present invention is a wrong technical term that does not accurately express the spirit of the present invention, the technical term should be understood by being substituted by a technical term which can be correctly understood by those skilled in the art. In addition, a general term used in the present invention should be interpreted as defined in a dictionary or contextually, and should not be interpreted as an excessively reduced meaning.

In addition, singular expressions used in the present invention include plurals expressions unless they have definitely opposite meanings. In the present invention, it should not analyzed that a term such as "comprising" or "including" particularly includes various components or various steps disclosed in the specification and some component or some steps among them may not included or additional components or steps may be further included.

In addition, terms including ordinal numbers, such as 'first' and 'second', used in the present invention can be used to describe various components, but the components should not be limited by the terms. The above terms are used only to discriminate one component from the other components. For example, a first component may be named a second component and similarly, the second component may also be named the first component, without departing from the scope of the present invention.

Hereinafter, preferable exemplary embodiment of the present invention will be described in more detail with reference to the accompanying drawings. Like reference numerals refer to like elements for easy overall understanding and a duplicated description of like elements will be omitted.

Further, in the following description, a detailed explanation of known related technologies may be omitted to avoid unnecessarily obscuring the subject matter of the present invention. Further, it is noted that the accompanying drawings are only for easily understanding the spirit of the present invention and it should not be interpreted that the spirit of the present invention is limited by the accompanying drawings.

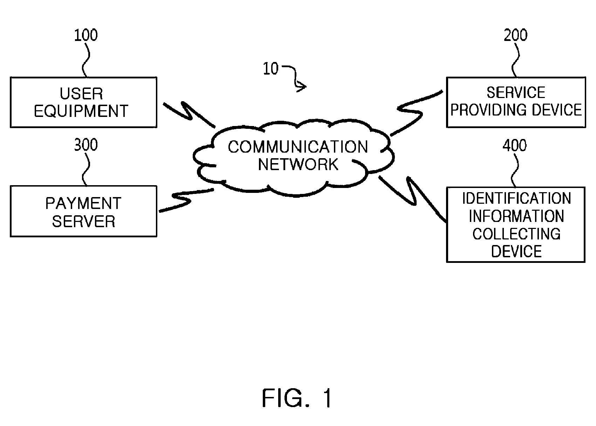

FIG. 1 is a block diagram illustrating a configuration of a ticket cancel guide system 10 according to an embodiment of the present invention.

As illustrated in FIG. 1, the ticket cancel guide system 10 is constituted by user equipment 100, a service providing device 200, a payment server 300, and an identification information collecting device 400. All components of the ticket cancel guide system 10 illustrated in FIG. 1 are not required, and the ticket cancel guide system 10 may be implemented by components which are more or fewer than the components illustrated in FIG. 1.

The user equipment 100 performs a ticket purchase function for one or more tickets through a ticket reservation site provided by the service providing device 200. Thereafter, the identification information collecting device 400 collects identification information of the user equipment 100 which enters a place and transmits the collected information to the service providing device 200. Thereafter, the service providing device 200 verifies identification information of residual user equipment, that is, identification information of at least one user equipment which does not use the corresponding place (alternatively, does not enter the corresponding place) except for identification information of one or more user equipment transmitted from the identification information collecting device 400 among identification information of a plurality of user equipment which purchases the ticket in association with the corresponding place. Thereafter, the service providing device 200 transmits ticket cancel/change guide information to the user equipment corresponding to the verified identification information of at least one user equipment, respectively. Thereafter, when a cancel URL address is selected among the ticket cancel/change guide information displayed in the user equipment 100, the user equipment 100 performs a cancel function for the corresponding ticket of which an expiration date elapses by interlocking with the service providing device 200 and the payment server 300. Further, when a change URL address is selected among the ticket cancel/change guide information displayed in the user equipment 100, the user equipment 100 performs a reservation date change function for the corresponding ticket of which the expiration date elapses by interlocking with the service providing device 200.

The user equipment 100 may be applied to various terminals such as a smart phone, a portable terminal, a mobile terminal, a personal digital assistant (PDA), a portable multimedia player (PMP), a telematics terminal, a navigation terminal, a personal computer, a notebook computer, a slate PC, a tablet PC, an ultrabook, a wearable device (for example, including a smartwatch, a smart glass, a head mounted display (HMD), and the like), a Wibro terminal, an Internet protocol television (IPTV) terminal, a smart TV, a digital broadcasting terminal, a television, a 3D television, a home theater system, an audio video navigation (AVN) terminal, an audio/video (A/V) system, and a flexible terminal, and the like.

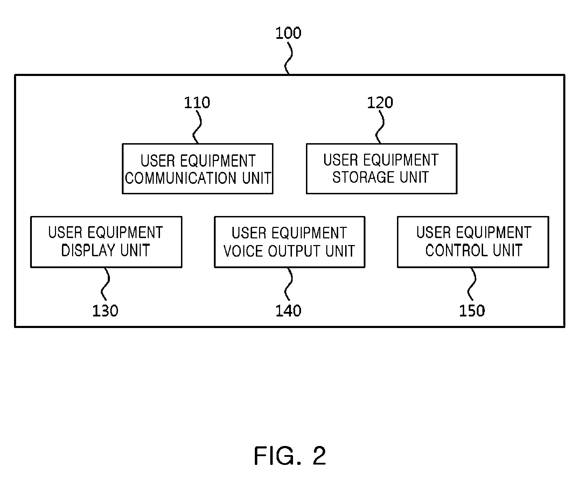

As illustrated in FIG. 2, the user equipment 100 is constituted by a user equipment communication unit 110, a user equipment storage unit 120, a user equipment display unit 130, a user equipment voice output unit 140, and a user equipment control unit 150. All the components of the user equipment 100 illustrated in FIG. 2 are not essential components, and the user equipment 100 may be implemented by more components than the components illustrated in FIG. 2 or less components therethan.

The user equipment communication unit 110 communicates with a predetermined internal component or at least one predetermined external terminal via a wired/ wireless communication network. In this case, the predetermined external terminal may include the service providing device 200, the payment server 300, the identification information collecting device 400, and the like. Herein, a wireless Internet technology includes wireless LAN (WLAN), digital living network alliance (DLNA), wireless broadband (Wibro), world interoperability for microwave access (Wimax), high speed downlink packet access (HSDPA), high speed uplink packet access (HSUPA), IEEE 802.16, long term evolution (LTE), long term evolution-advanced (LTE-A), wireless Mobile broadband service (WMBS), and the like and the user equipment communication unit 110 transmits/receives data according to at least one wireless Internet technology in a range to include even Internet technologies not enumerated as above. Further, a short-range communication technology may include Bluetooth, radio frequency identification (RFID), infrared data association (IrDA), ultra wideband (UWB), ZigBee, near field communication (NFC), ultra sound communication (USC), visible light communication (VLC), Wi-Fi, Wi-Fi direct, and the like. In addition, a wired communication technology may include power line communication (PLC), USB communication, Ethernet, serial communication, optical/coaxial cable, and the like.

Further, the user equipment communication unit 110 may mutually transmit a predetermined terminal and information through a universal serial bus (USB).

Further, the user equipment communication unit 110 transmits and receives a wireless signal to and from a base station, the service proving device 200, the payment server 300, the identification information collecting device 400, and the like on a mobile communication network constructed according to technical standards for mobile communication or communication schemes (for example, global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), long term evolution (LTE), long term evolution-advanced (LTE-A), or the like).

In addition, the user equipment communication unit 110 accesses the ticket reservation site provided by the service providing device 200 by control of the user equipment control unit 150. Herein, the ticket reservation site includes a movie ticket reservation site, a railroad (alternatively, train) ticket reservation site, a sport game ticket reservation site, and the like.

In addition, the user equipment communication unit 110 receives a user interface screen for the ticket reservation provided by the corresponding ticket reservation site, and the like by the control of the user equipment control unit 150.

The user equipment storage unit 120 stores various user interfaces (UIs), graphic user interfaces (GUIs), and the like.

Further, the user equipment storage unit 120 stores data, programs, and the like which are required to operate the user equipment 100.

That is, the user equipment storage unit 120 may store a plurality of application programs (alternatively, applications) driven in the user equipment 100 and data and commends for the operation of the user equipment 100. At least some of the application programs may be downloaded from an external service providing device through wireless communication. Further, at least some of the application programs may be present on the user equipment 100 from a delivery time for base functions (for example, phone receipt and call functions and message receiving and sending functions) of the user equipment 100. Meanwhile, the application program is stored in the user equipment storage unit 120 and installed on the user equipment 100 to be driven to perform an operation (alternatively, a function) of the user equipment 100 by the user equipment control unit 150.

Further, the user equipment storage unit may include at least one storage medium of a flash memory type, a hard disk type, a multimedia card micro type, a card type memory (for example, an SD or XD memory, or the like), a magnetic memory, a magnetic disk, an optical disk, a random access memory (RAM), a static random access memory (SRAM), a read-only memory (ROM), an electrically erasable programmable read-only memory (EEPROM), and a programmable read-only memory (PROM). Further, the user equipment 100 may operate a web storage performing a storage function of the user equipment storage unit 120 on the Internet or operate in association with the web storage.

In addition, the user equipment storage unit 120 receives the user interface screen for the ticket reservation provided by the corresponding ticket reservation site, and the like through the user equipment communication unit 110 by the control of the user equipment control unit 150.

The user equipment display unit 130 may display various contents such as various menu screens by using the UI and/or the GUI stored in the user equipment storage unit 120 by the control of the user equipment control unit 150. Herein, the contents displayed on the user equipment display unit 130 include a menu screen including various texts or image data (including various information data) and data such as icons, a list menu, and a combo box, and the like. Further, the user equipment display unit 130 may be a touch screen.

In addition, the user equipment display unit 130 may include at least one of a liquid crystal display (LCD), a thin film transistor-liquid crystal display (TFT LCD), an organic light-emitting diode (OLED), a flexible display, a 3D display, an e-ink display, and a light emitting diode (LED).

Further, the user equipment display unit 130 may be constituted as a stereoscopic display unit displaying a stereoscopic image.

A 3D display type such as a stereoscopic type (a glasses type), an auto-stereoscopic type (a glassless type), and a projection type (a holographic type) may be applied to the stereoscopic display unit.

In addition, the user equipment display unit 130 displays the user interface screen for the ticket reservation provided by the corresponding ticket reservation site, and the like through the user equipment communication unit 110 by the control of the user equipment control unit 150.

The user equipment voice output unit 140 outputs voice information included in a signal signal-processed by the user equipment control unit 150. Herein, the user equipment voice output unit 140 may include a receiver, a speaker, a buzzer, and the like.

Further, the user equipment voice output unit 140 outputs a guidance voice generated by the user equipment control unit 150.

In addition, the user equipment voice output unit 140 outputs the voice information corresponding to the user interface screen for the ticket reservation provided by the corresponding ticket reservation site, and the like received through the user equipment communication unit 110 by the control of the user equipment control unit 150.

The user equipment control unit 150 executes an overall control function of the user equipment 100.

Further, the user equipment control unit 150 executes the overall control function of the user equipment 100 by using the programs and data stored in the user equipment storage unit 120. The user equipment control unit 150 may include a RAM, a ROM, a CPU, a GPU, and a bus, and the RAM, the ROM, the CPU, the GPU, and the like may be connected to each other through the bus. The CPU accesses the user equipment storage unit 120 to perform booting by using an O/S stored in the user equipment storage unit 120 and may perform various operations by using various programs, contents, data, and the like stored in the user equipment storage unit 120.

Further, the user equipment control unit 150 performs a member joining procedure for the user of the corresponding user equipment 100 by interlocking with the service providing device 200.

In addition, at the time of performing the member joining procedure, the user equipment control unit 150 may normally complete the member joining procedure for the service providing device 200 only by completing an authentication function through an own authentication means (including, for example, a mobile phone, a credit card, an ipin, e-mail, and the like).

In addition, the user equipment control unit 150 accesses the ticket reservation site provided by the service providing device 200 through the user equipment communication unit 110. In this case, the user equipment control unit 150 (alternatively, the user of the corresponding user equipment 100) may be a member preregistered in the corresponding service providing device 200. Herein, the ticket reservation site includes a movie ticket reservation site, a railroad (alternatively, train) ticket reservation site, a sport game ticket reservation site, and the like. In this case, the user equipment control unit 150 provides the identification information of the user equipment 100, and the like to the corresponding service providing device 200. Herein, the identification information of the user equipment 100 includes a mobile directory number (MDN), a mobile IP, a mobile MAC, subscriber identification module (Sim) card unique information, a serial number, and the like.

In addition, the user equipment control unit 110 receives the user interface screen for the ticket reservation provided by the corresponding ticket reservation site, and the like through the user equipment communication unit 110.

Further, the user equipment control unit 150 displays the received user interface screen for the ticket reservation on the user equipment display unit 130.

Moreover, the user equipment control unit 150 performs the ticket purchase function for a ticket to be purchased by interlocking with the service providing device 200 and the payment server 300 based on information such as a specific date, a specific time, the specific number of tickets, and the like according to user input (alternatively, user selection). In this case, the user equipment control unit 150 may transmit the identification information of the corresponding user equipment 100, and the like to the service providing device 200 in a background state.

Further, when the ticket purchase function is normally completed, the user equipment control unit 150 receives a ticket purchase function execution result transmitted from the service providing device 200 through the user equipment communication unit 110. Herein, the ticket purchase function execution result (alternatively, ticket purchase information/a ticket payment function execution result) includes a place name (including, for example, a theater name, a train station name, a sports stadium, and the like), place specific identification information, reservation date and time information, the number (alternatively, the quantity) of tickets, a total payment amount, payment date and time information, a payment card type, and the like. In this case, the payment card includes a credit card, a cash card (alternatively, a check card), a point card, a gift card, a coupon, and the like.

Further, the user equipment control unit 150 outputs the received ticket purchase function execution result through the user equipment display unit 130 and/or the user equipment voice output unit 140.

In addition, when the user of the user equipment 100 which purchases the corresponding ticket enters a place (alternatively, a store) where the user may use the corresponding ticket, the user equipment control unit 150 receives an identification information request signal transmitted from the identification information collecting device 400 through the user equipment communication unit 110, through a BLE communication scheme. In this case, a communication scheme between the user equipment 100 and the identification information collecting device 400 may adopt any one communication scheme among various wired/wireless communication schemes in addition to the BLE communication.

That is, when the user of the user equipment 100 which purchases the corresponding ticket enters a place (alternatively, a store) where the user may use the corresponding ticket for the expiration date (for example, the reservation date and time information), the user equipment control unit 150 receives the identification information request signal transmitted from the identification information collecting device 400 through the user equipment communication unit 110.

Further, the user equipment control unit 150 transmits the identification information of the corresponding user equipment 100 to the identification information colleting device 400 through the user equipment communication unit 110 in response to the received identification information request signal.

In addition, when the user of the user equipment 100 which purchases the corresponding ticket does not use the corresponding ticket, the user equipment control unit 150 receives the ticket cancel/change guide information transmitted from the service providing device 200 through the user equipment communication unit 110. Herein, the ticket cancel/change guide information includes a place name, place specific identification information, reservation date and time information, the number (alternatively, the quantity) of tickets, a total payment amount, payment date and time information, a payment card type, a cancel URL address for cancellation, a change URL address for changing the reservation date, and the like associated with the ticket purchased by the corresponding user equipment 100.

Further, the user equipment control unit 150 outputs the received ticket cancel/change guide information through the user equipment display unit 130 and/or the user equipment voice output unit 140.

In addition, when the cancel URL address is selected among the ticket cancel/change guide information displayed on the user equipment display unit 130, the user equipment control unit 150 accesses a ticket cancel site corresponding to the corresponding cancel URL address provided (alternatively, managed) by the corresponding service providing device 200 through the user equipment communication unit 110.

Further, the user equipment control unit 110 receives the user interface screen for ticket cancellation provided by the corresponding ticket cancel site, and the like through the user equipment communication unit 110.

Moreover, the user equipment control unit 150 displays the received user interface screen for the ticket cancellation on the user equipment display unit 130.

Further, the user equipment control unit 150 performs a ticket cancel function for a ticket to be cancelled by interlocking with the service providing device 200 and the payment server 300. In this case, the user equipment control unit 150 may transmit the identification information of the corresponding user equipment 100, and the like to the service providing device 200 through the user equipment communication unit 110 in the background state.

That is, when there is an unused ticket among one or more tickets purchased (alternatively, reserved) by the corresponding user equipment 100 as described above, the user equipment control unit 150 performs the ticket cancel function for an associated ticket which needs to be cancelled by interlocking with the service providing device 200 and the payment server 300.

Further, the user equipment control unit 150 receives a ticket cancel function execution result transmitted from the service providing device 200 or the payment server 300 through the user equipment communication unit 110. Herein, the ticket cancel function execution result (alternatively, ticket cancel information) includes a place name, place specific identification information, reservation date and time information, the number (alternatively, the quantity) of tickets, a total payment amount, payment date and time information, a payment card type, a payment cancel amount, payment cancel date and time information, refund scheme information, and the like. In this case, the refund scheme information includes cancellation for a payment card to perform payment, refund to a deposit/point, deposit in a designated account, and the like.

Further, the user equipment control unit 150 outputs the received ticket cancel function execution result through the user equipment display unit 130 and/or the user equipment voice output unit 140.

In addition, when the change URL address is selected among the ticket cancel/change guide information displayed on the user equipment display unit 130, the user equipment control unit 150 accesses a ticket change site corresponding to the change URL address provided (alternatively, managed) by the corresponding service providing device 200 through the user equipment communication unit 110.

Moreover, the user equipment control unit 110 receives the user interface screen for ticket reservation date change provided by the corresponding ticket change site, and the like through the user equipment communication unit 110.

In addition, the user equipment control unit 150 displays the received user interface screen for the ticket reservation date change, and the like on the user equipment display unit 130.

Further, the user equipment control unit 150 performs a ticket reservation date change function for a ticket of which the reservation date is intended to be changed by interlocking with the service providing device 200. In this case, the user equipment 100 may transmit the identification information of the corresponding user equipment 100, and the like to the service providing device 200 through the user equipment communication unit 110 in the background state.

That is, when there is the unused ticket among one or more tickets purchased (alternatively, reserved) by the corresponding user equipment 100 as described above, the user equipment control unit 150 performs the ticket reservation date change function for the associated ticket of which the reservation date change is required by interlocking with the service providing device 200. In this case, when the user equipment control unit 150 performs the ticket reservation date change function, the corresponding user equipment control unit 150 may additionally pay a predetermined fee by interlocking with the service providing device 200 and the payment server 300.

Further, the user equipment control unit 150 receives a ticket reservation date change function execution result transmitted from the service providing device 200 through the user equipment communication unit 110. Herein, the ticket reservation date change function execution result (alternatively, ticket reservation date change information) includes a place name, place specific identification information, reservation date and time information, the number (alternatively, the quantity) of tickets, a total payment amount, payment date and time information, a payment card type, change reservation date and time information, change date information, and the like.

Further, the user equipment control unit 150 outputs the received ticket reservation date change function execution result through the user equipment display unit 130 and/or the user equipment voice output unit 140.

Further, the user equipment 100 may further include an interface unit (not illustrated) serving as an interface with all external devices connected to the corresponding user equipment 100. For example, the interface unit may be constituted by a wired/ wireless headset port, an external charger port, a wired/ wireless data port, a memory card port, a port connecting devices with identification modules, an audio input/ output (I/O) port, a video input/ output (I/O) port, an earphone port, and the like. Herein, the identification module is a chip storing various information for authenticating a permission of the user equipment 100 and may include a user identity module (UIM), a subscriber identity module (SIM), a universal subscriber identity module (USIM), and the like. Further, the device provided with the identification module may be prepared in a smart card form. Accordingly, the identification module may be connected with the user equipment 100 through the port. Such an interface unit receives data or power from an external device to transfer the received data or power to each component in the user equipment 100 or transmit the data in the user equipment 100 to the external device.

Further, the interface unit may be a passage through which the power from a cradle is supplied to the corresponding user equipment 100 when the user equipment 100 is connected with an external cradle or a passage through which various command signals input from the cradle by the user is transferred to the corresponding user equipment 100. Various command signals input from the cradle or the corresponding power may also operate by a signal for recognizing that the user equipment 100 is accurately installed on the cradle.

Further, the user equipment 100 may further include an input unit (not illustrated) for receiving a signal according to a button operation of the user or any function selection or receiving a command or a control signal generated by an operation such as touching/scrolling the displayed screen.

The input unit as a means for receiving at least one of a user's command, selection, data, and information may include a plurality of input keys and function keys for receiving figure or text information and setting various functions.

Further, the input unit may adopt various devices such as a key pad, a dome switch, a touch pad (static pressure/electrostataic), a touch screen, a jog wheel, a jog switch, a jog shuttle, a mouse, a stylus pen, and a touch pen. Particularly, when the user equipment display unit 130 is formed in a touch screen form, some or all of the input functions may be performed by the user equipment display unit 130.

Further, each component (alternatively, each module) of the user equipment 100 may software stored on a memory (alternatively, the user equipment storage unit 120) of the user equipment 100. The memory may be an internal memory of the user equipment 100 and may an external memory or other types of storage devices. Further, the memory may be a non-volatile memory. The software stored on the memory may include a command set to allow the user equipment 100 to perform a specific operation while executing.

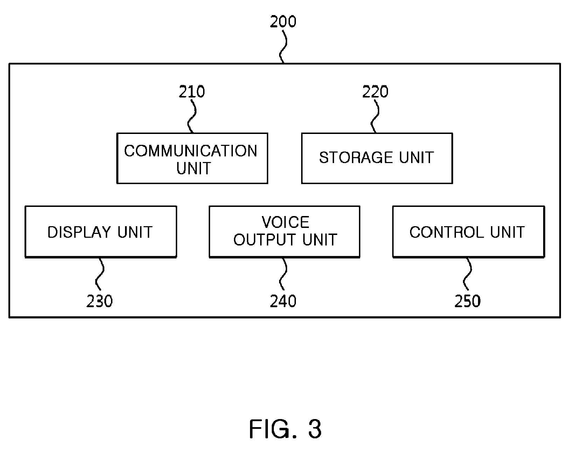

As illustrated in FIG. 3, the service providing device 200 is constituted by a communication unit 210, a storage unit 220, a display unit 230, a voice output unit 240, and a control unit 250. All of the components of the service providing device 200 illustrated in FIG. 3 are not required components, and the service providing device 200 may be implemented by more components than the components illustrated in FIG. 3 or less components therethan.

The communication unit 210 communicates with a predetermined internal component or at least one predetermined external terminal via the wired/ wireless communication network. In this case, any external terminal may include the user equipment 100, the payment server 300, the identification information collecting device 400, and the like. Herein, the wireless Internet technology includes WLAN, DLNA, Wibro, Wimax, HSDPA, HSUPA, IEEE 802.16, long term evolution (LTE), LTE-A, wireless Mobile broadband service (WMBS), and the like and the communication unit 210 transmits/receives data according to at least one wireless Internet technology in a range to include even Internet technologies not enumerated as above. Further, the short-range communication technology may include Bluetooth, radio frequency identification (RFID), infrared data association (IrDA), ultra wideband (UWB), ZigBee, near field communication (NFC), ultra sound communication (USC), visible light communication (VLC), Wi-Fi, Wi-Fi direct, and the like. Further, the wired communication technique may include power line communication (PLC), USB communication, Ethernet, serial communication, optical/coaxial cable, or the like.

Further, the communication unit 210 may mutually transmit the information with any terminal through the universal serial bus (USB).

In addition, the communication unit 210 performs an access function to the user equipment 100 for the ticket reservation site provided by the corresponding service providing device 200 by control of the control unit 250.

Moreover, the communication unit 210 transmits the user interface screen for the ticket reservation provided by the corresponding ticket reservation site, and the like to the user equipment 100 that accesses the corresponding ticket reservation site by the control of the control unit 250.

The storage unit 220 stores various user interfaces (UI), graphic user interfaces (GUI), and the like.

Further, the storage unit 220 stores data, programs, and the like which are required to operate the service providing device 200.

In addition, the storage unit 220 may include at least one storage medium of the flash memory type, the hard disk type, the multimedia card micro type, the card type memory (for example, the SD or XD memory, or the like), the magnetic memory, the magnetic disk, an optical disk, the RAM, the SRAM, the ROM, the EEPROM, and the PROM. Further, the service providing device 200 may operate the web storage performing the storage function of the storage unit 220 on the Internet or operate in association with the web storage.

Moreover, the storage unit 220 stores the user interface screen for the ticket reservation, the user interface screen for the ticket cancellation, the user interface screen for the ticket change, and the like by the control of the control unit 250.

The display unit 230 may display various contents such as various menu screens by using the UI and/or the GUI stored in the storage unit 220 by the control of the control unit 250. Herein, the contents displayed on the display unit 230 include a menu screen including various texts or image data (including various information data) and data such as icons, a list menu, and a combo box, and the like. Further, the display unit 230 may be the touch screen.

In addition, the display unit 230 may include at least one of the LCD, the TFT LCD, the OLED, the flexible display, the 3D display, the e-ink display, and the LED.

Moreover, the display unit 230 displays the user interface screen for the ticket reservation, the user interface screen for the ticket cancellation, the user interface screen for the ticket change, and the like by the control of the control unit 250.

The voice output unit 240 outputs voice information included in a predetermined signal-processed by the control unit 250. Herein, the voice output unit 240 may include a receiver, a speaker, a buzzer, and the like.

Further, the voice output unit 240 outputs a guidance voice generated by the control unit 250.

Moreover, the voice output unit 240 outputs voice information corresponding to the user interface screen for the ticket reservation, the user interface screen for the ticket cancellation, the user interface screen for the ticket change, and the like by the control of the control unit 250.

The control unit 250 executes an overall control function of the service providing device 200.

Further, the control unit 250 executes the overall control function of the service providing device 200 by using the programs and data stored in the storage unit 220. The control unit 250 may include a RAM, a ROM, a CPU, a GPU, and a bus, and the RAM, the ROM, the CPU, the GPU, and the like may be connected to each other through the bus. The CPU accesses the storage unit 220 to perform booting by using an O/S stored in the storage unit 220 and may perform various operations by using various programs, contents, data, and the like stored in the storage unit 220.

Further, the control unit 250 performs the member joining procedure for the user of the corresponding user equipment 100, respectively, by interlocking with the user equipment 100.

In addition, the control unit 250controls the access function to the user equipment 100 for the ticket reservation site provided by the corresponding service providing device 200.

Moreover, the control unit 250 transmits the user interface screen for the ticket reservation provided by the corresponding ticket reservation site, and the like to the user equipment 100 that accesses the ticket reservation site provided by the corresponding service providing device 200 through the communication unit 210.

Further, the control unit 250 performs the ticket purchase function for a ticket to be purchased in the corresponding user equipment 100 by interlocking with the corresponding user equipment 100 and the payment server 300 based on information such as a specific date, a specific time, the specific number of tickets, and the like according to user input (alternatively, user selection) of the user equipment 100. In this case, the control unit 250 may receive the identification information of the corresponding user equipment 100, and the like transmitted from the corresponding user equipment 100 through the communication unit 110 in the background state.

Further, the control unit 250 transmits the ticket purchase function execution result to the user equipment 100 through the communication unit 210. Herein, the ticket purchase function execution result (alternatively, the ticket purchase information/the ticket payment function execution result) includes the place name (including, for example, the theater name, the train station name, the sports stadium, and the like), the place specific identification information, the reservation date and time information, the number of tickets (alternatively, the quantity of tickets), the total payment amount, the payment date and time information, the payment card type, and the like. In this case, the payment card includes the credit card, the cash card (alternatively, the check card), the point card, the gift card, the coupon, and the like.

Further, the control unit 250 stores (alternatively, manages) the ticket purchase function execution result in the storage unit 220 for each identification information of the user equipment.

That is, the control unit 250 stores in the storage unit 220 the ticket purchase function execution result for the identification information of the corresponding user equipment which purchases the ticket for each place (alternatively, store)/each date/each turn in which the corresponding ticket is used.

Further, the control unit 250 receives identification information of one or more user equipment 100 transmitted from the identification information collecting device 400, place information (alternatively, place specific identification information), collection date and time information, identification information of the identification information collecting device 400, and the like through the communication unit 210.

In addition, the control unit 250 compares identification information of a plurality of (alternatively, one or more) user equipment which purchases the ticket in association with a prestored corresponding place and identification information of one or more user equipment transmitted from the identification information collecting device 400 to verify identification information (alternatively, identification information of the user equipment which does not enter the corresponding place/identification information of the user equipment in which a use date of the ticket and the time elapsed) of residual user equipment except for the identification information of one or more user equipment transmitted from the identification information collecting device 400 among corresponding prestored identification information of the plurality of user equipment.

That is, in order to verify the user equipment 100 which does not use the ticket purchased at the corresponding use date (alternatively, use turn) after purchasing the ticket, the control unit 250 verifies the identification information of one or more user equipment in which the identification information of the plurality of user equipment corresponding to the collection date and time information of the corresponding place prestored in the storage unit 220 and the identification information of one or more user equipment transmitted from the identification information collecting device 400 overlap with each other.

Further, the control unit 250 verifies identification information of the residual user equipment except for the verified overlapped identification information of one or more user equipment among the identification information of the plurality of user equipment corresponding to the collection date and time information of the corresponding place prestored in the storage unit 220.

Moreover, the control unit 250 generates the ticket cancel/change guide information to be transmitted to each of at least one user equipment 100 corresponding to the verified identification information of the user equipment which does not enter the corresponding place. Herein, the corresponding ticket cancel/change guide information may vary depending on the ticket purchase function execution result purchased by the corresponding user equipment 100. In this case, the ticket cancel/change guide information includes the place name, the place specific identification information, the reservation date and time information, the number (alternatively, the quantity) of tickets, the total payment amount, the payment date and time information, the payment card type, the cancel URL address for cancellation, the change URL address for changing the reservation date, and the like associated with the ticket purchased by the corresponding user equipment 100.

Moreover, the control unit 250 generates the generated ticket cancel/change guide information to at least one user equipment 100 corresponding to the identification information of the user equipment which does not enter the corresponding place through the communication unit 210.

In addition, when the cancel URL address is selected by the corresponding user equipment 100 among the ticket cancel/change guide information transmitted to the user equipment 100, the control unit 250 controls the access function to the user equipment 100 for the ticket cancel site corresponding to the corresponding cancel URL address provided by the corresponding service providing device 200.

Further, the control unit 250 transmits the user interface screen for the ticket cancellation provided by the corresponding ticket cancel site, and the like to the user equipment 100 that accesses the ticket cancel site provided by the corresponding service providing device 200 through the communication unit 210.

Moreover, the control unit 250 performs the ticket cancel function for a ticket of which the expiration date elapsed after purchasing the ticket in the corresponding user equipment 100 by interlocking with the corresponding user equipment 100 and the payment server 300 based on ticket cancel determination according to the user input (alternatively, user selection) of the user equipment 100. In this case, the control unit 250 may receive the identification information of the corresponding user equipment 100, and the like transmitted from the corresponding user equipment 100 through the communication unit 110 in the background state. Herein, the control unit 250 may refund the remaining amount of money except for a predetermined fee to the corresponding user equipment 100.

Further, the control unit 250 transmits the ticket cancel function execution result to the user equipment 100 through the communication unit 210. Herein, the ticket cancel function execution result (alternatively, ticket cancel information) includes a place name, place specific identification information, reservation date and time information, the number (alternatively, the quantity) of tickets, a total payment amount, payment date and time information, a payment card type, a payment cancel amount, payment cancel date and time information, refund scheme information, and the like. In this case, the refund scheme information includes cancellation for a payment card to perform payment, refund to a deposit/point, deposit in a designated account, and the like.

Further, the control unit 250 stores (alternatively, manages) the ticket cancel function execution result in the storage unit 220 for each identification information of the user equipment.

That is, the control unit 250 stores in the storage unit 220 the ticket cancel function execution result for the identification information of the corresponding user equipment which cancels the ticket for each place (alternatively, store) in which the corresponding ticket is used.

In addition, when the change URL address is selected by the corresponding user equipment 100 among the ticket cancel/change guide information transmitted to the user equipment 100, the control unit 250 controls the access function to the user equipment 100 for the ticket change site corresponding to the corresponding change URL address provided by the corresponding service providing device 200.

Further, the control unit 250 transmits the user interface screen for the ticket reservation date change provided by the corresponding ticket change site, and the like to the user equipment 100 that accesses the corresponding ticket change site provided by the corresponding service providing device 200 through the communication unit 210.

Moreover, the control unit 250 performs the ticket reservation date change function for a ticket of which the expiration date elapsed after purchasing the ticket in the corresponding user equipment 100 by interlocking with the corresponding user equipment based on a date to be changed, a change time, and the like according to the user input (alternatively, user selection) of the user equipment 100. In this case, the control unit 250 may receive the identification information of the user equipment 100, and the like transmitted from the corresponding user equipment 100 through the communication unit 110 in the background state.

That is, when there is the unused ticket among one or more tickets purchased (alternatively, reserved) by the corresponding user equipment 100 as described above, the control unit 250 performs the ticket reservation date change function for the associated ticket of which the reservation date change is required by interlocking with the user equipment 100. In this case, when the ticket reservation date change function is executed, the corresponding control unit 250 may additionally pay (alternatively, request) a predetermined fee to the corresponding user equipment 100.

Further, the control unit 250 transmits a ticket reservation date change function execution result to the user equipment 100 through the communication unit 210. Herein, the ticket reservation date change function execution result (alternatively, ticket reservation date change information) includes a place name, place specific identification information, reservation date and time information, the number (alternatively, the quantity) of tickets, a total payment amount, payment date and time information, a payment card type, change reservation date and time information, change date information, and the like.

Further, the control unit 250 stores (alternatively, manages) the ticket reservation date change function execution result in the storage unit 220 for each identification information of the user equipment.

That is, the control unit 250 stores in the storage unit 220 the ticket reservation date change function execution result for the identification information of the corresponding user equipment which changes the reservation date of the ticket for each place (alternatively, store) in which the corresponding ticket is used.

Further, the service providing device 200 may be implemented in a form such as a web server, a database server, and a proxy server. Further, in the service providing device 200, one or more of various software which allows a network load distribution mechanism to a service device to operate on the Internet or other networks may be installed, and as a result, the service providing device 200 may be implemented by a computerized system. Further, the network may be an http network and may be a private line, intranet, or any other networks. Furthermore, each of the service providing devices 200 and the user equipment 100 may be connected to each other by a security network so as to prevent the network from being attacked by any hacker or other third parties. Further, the service providing device 200 may include a plurality of database servers, and the database server may be implemented to be separately connected with the service providing device 200 through any type of network connection including a distributed database sever architecture.

Further, a processor installed in the user equipment 100 or the service providing device 200 according to the present invention may process the program command for executing the method according to the present invention. In one implementation example, the processor may be a single-threaded processor and in another implementation example, the processor may be a multi-threaded processor. Furthermore, the processor may process a command stored in the memory or a storage device.

The payment server 300 communicates with the user equipment 100, the service providing device 200, and the like.

Further, the payment server 300 performs the ticket purchase function for a ticket to be purchased in the corresponding user equipment 100 by interlocking with the corresponding user equipment 100 and the service providing device 200 based on information such as a specific date, a specific time, the specific number of tickets, and the like according to user input (alternatively, user selection) of the user equipment 100.

Further, the payment server 300 provides the ticket purchase function execution result to the user equipment 100 and/or the service providing device 200. Herein, the ticket purchase function execution result (alternatively, ticket purchase information/a ticket payment function execution result) includes a place name (including, for example, a theater name, a train station name, a sports stadium, and the like), place specific identification information, reservation date and time information, the number of tickets (alternatively, the quantity of tickets), a total payment amount, payment date and time information, a payment card type, and the like. In this case, the payment card includes the credit card, the cash card (alternatively, the check card), the point card, the gift card, the coupon, and the like.

Further, the payment server 300 stores (alternatively, manages) the ticket purchase function execution result for each identification information of the user equipment.

That is, the payment server 300 stores the ticket purchase function execution result for the identification information of the corresponding user equipment which purchases the ticket for each place (alternatively, store)/each date/each turn in which the corresponding ticket is used.

Moreover, the payment server 300 performs the ticket cancel function for a ticket of which the expiration date elapsed after purchasing the ticket in the corresponding user equipment 100 by interlocking with the corresponding user equipment 100 and the service providing device 200 based on ticket cancel determination according to the user input (alternatively, user selection) of the user equipment 100.

Further, the payment server 300 transmits the ticket cancel function execution result to the user equipment 100 and/or the service providing device 200. Herein, the ticket cancel function execution result (alternatively, ticket cancel information) includes a place name, place specific identification information, reservation date and time information, the number (alternatively, the quantity) of tickets, a total payment amount, payment date and time information, a payment card type, a payment cancel amount, payment cancel date and time information, refund scheme information, and the like. In this case, the refund scheme information includes cancellation for a payment card to perform payment, refund to a deposit/point, deposit in a designated account, and the like.

Further, the payment server 300 stores (alternatively, manages) the ticket cancel function execution result for each identification information of the user equipment.

That is, the payment server 300 stores the ticket cancel function execution result for the identification information of the corresponding user equipment which cancels the ticket for each place (alternatively, store) in which the corresponding ticket is used.

The identification information collecting device 400 communicates with the user equipment 100, the service providing device 200, and the like.

Further, the identification information collecting device 400 collects identification information of the user equipment 100 which enters (comes in) the place (alternatively, store) associated with the ticket purchased by the corresponding service providing device 200.

That is, the identification information collecting device 400 is installed at an entrance of the corresponding place and broadcasts (alternatively, transmits) the identification information request signal for requesting the identification information to one or more user equipment 100 which enters (comes in) the corresponding place through the BLE communication scheme. In this case, the identification information collecting device 400 may transmit the corresponding identification information request signal by considering directionality so as to receive the corresponding identification information request signal only in the user equipment positioned in the place.

Further, the identification information collecting device 400 receives the collected identification information of one or more user equipment 100, place information (alternatively, place specific identification information), collection date and time information, the identification information of the identification information collecting device 400, and the like to the service providing device 200. In this case, the identification information collecting device 400 may transmit the collected identification information of one or more user equipment 100 arranged for each place/each date/each turn, and the like to the service providing device 200.

As described above, the identification information of at least one user equipment which does not enter the place associated with the ticket may be verified, the ticket cancel guide information may be transmitted to the corresponding user equipment corresponding to the verified identification information of at least one user equipment which does not enter the corresponding place, and the cancel procedure is performed by interlocking with the service providing device and the payment server based on the ticket cancel guide information in the corresponding user equipment.

Hereinafter, a control method of a ticket cancel guide system using BLE according to an embodiment of the present invention will be described in detail with reference to FIGS. 1 to 9.

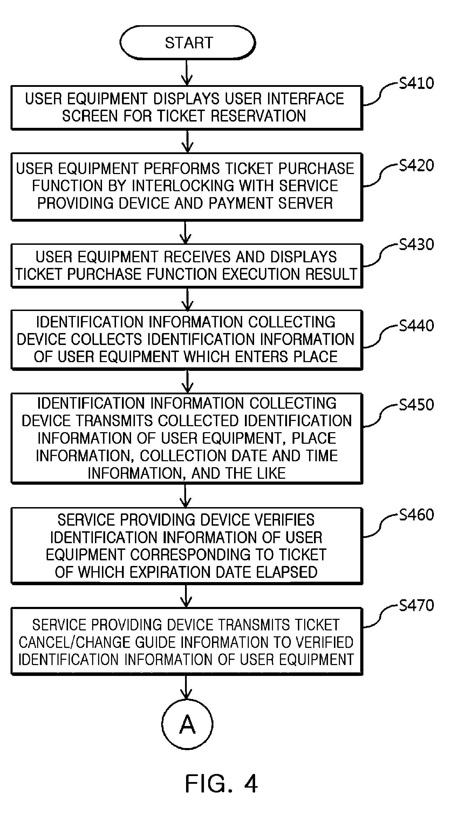

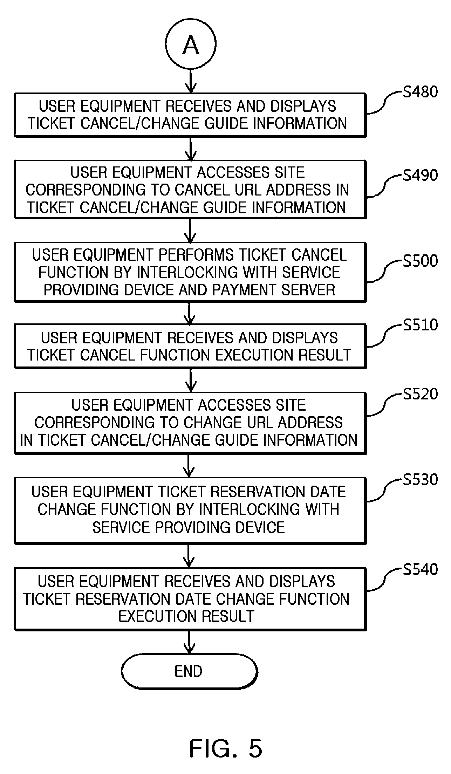

FIGS. 4 and 5 are flowcharts illustrating a control method of a ticket cancel guide system using BLE according to an embodiment of the present invention.

First, the user equipment 100 accesses the ticket reservation site provided by the service providing device 200. In this case, the user equipment 100 (alternatively, the user of the corresponding user equipment 100) may be a member preregistered in the corresponding service providing device 200. Herein, the ticket reservation site includes a movie ticket reservation site, a railroad (alternatively, train) ticket reservation site, a sport game ticket reservation site, and the like.

Further, the user equipment 100 displays the user interface screen for the ticket reservation provided by the corresponding ticket reservation site.

As one example, the user equipment 100 accesses a movie ticket reservation site and displays a user interface screen for reserving a movie ticket, which is provided by the corresponding movie ticket reservation site (S410).

Thereafter, the user equipment 100 performs the ticket purchase function for a ticket to be purchased by interlocking with the service providing device 200 and the payment server 300 based on information such as a specific date, a specific time, the specific number of tickets, and the like according to user input (alternatively, user selection). In this case, the user equipment 100 may transmit the identification information of the corresponding user equipment 100, and the like to the service providing device 200 in the background state. In this case, the identification information of the user equipment 100 includes an MDN, a mobile IP, a mobile MAC, subscriber identification module (Sim) card unique information, a serial number, and the like.

As one example, the user equipment 100 performs the ticket purchase function (alternatively, ticket payment function) for two corresponding tickets by interlocking with the service providing device 200 and the payment server 300 based on information such as 7 p.m. on January 11, 2015, seat No. #11 and #12, the number of tickets of 2 tickets, and the like with respect to a movie played in an ABCD theater according to the user input.

Thereafter, the service providing device 200 transmits the ticket purchase function execution result to the user equipment 100. Herein, the ticket purchase function execution result (alternatively, ticket purchase information/a ticket payment function execution result) includes a place name (including, for example, a theater name, a train station name, a sports stadium, and the like), place specific identification information, reservation date and time information, the number of tickets (alternatively, the quantity of tickets), a total payment amount, payment date and time information, a payment card type, and the like. In this case, the payment card includes the credit card, the cash card (alternatively, the check card), the point card, the gift card, the coupon, and the like.

Further, the user equipment receives the ticket purchase function execution result transmitted from the service providing device 200 and displays the received ticket purchase function execution result.

Further, the service providing device 200 stores (alternatively, manages) the ticket purchase function execution result for each identification information of the user equipment.

That is, the service providing device 200 stores the ticket purchase function execution result for the identification information of the corresponding user equipment which purchases the ticket for each place (alternatively, store)/each date/each turn in which the corresponding ticket is used.

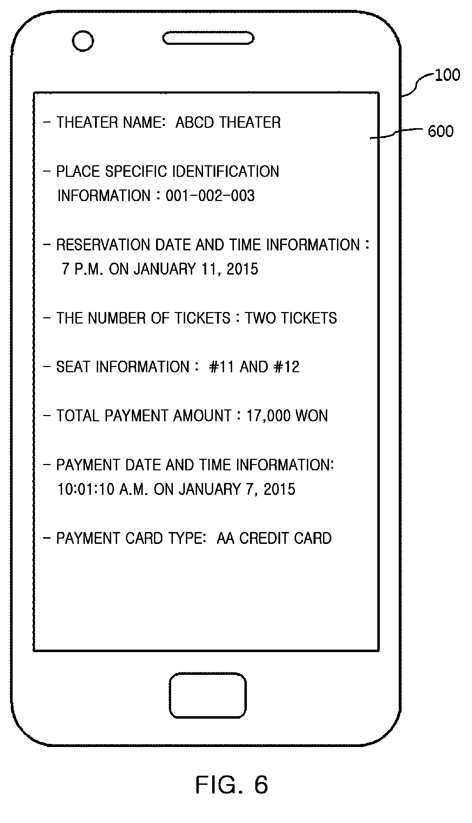

As one example, the payment function for the two movie tickets selected by the user of 191^{st} user equipment 100 is normally executed by interlocking with the 191^{st} user equipment, the service providing device 200, and the payment server 300, the 191^{st} user equipment displays a ticket purchase function execution result 600 including the theater name (for example, ABCD theater), the place specific identification information (for example, 001-002-003), the reservation date and time information (for example, 7 p.m. on January 11, 2015), the number of tickets (for example, 2 tickets), the seat information (for example, #11 and #12), the total payment amount (for example, 17,000 won), the payment date and time information (for example, 10:01:10 a.m. on January 7, 2015), the payment card type (for example, AA credit card), and the like as illustrated in FIG. 6 (S430).

Thereafter, the identification information collecting device 400 collects identification information of the user equipment 100 which enters (comes in) the place (alternatively, store) associated with the ticket purchased by the corresponding service providing device 200.

That is, the identification information collecting device 400 is installed at an entrance of the corresponding place and broadcasts (alternatively, transmits) the identification information request signal for requesting the identification information to one or more user equipment 100 which enters (or comes in) the corresponding place through the BLE communication scheme. In this case, the identification information collecting device 400 transmits the corresponding identification information request signal by considering directionality so as to receive the corresponding identification information request signal only in the user equipment positioned in the place.

Further, the user equipment 100 which enters the corresponding place receives the identification information request signal transmitted from the identification information colleting device 400 through the BLE communication scheme.

In addition, the user equipment 100 entering the corresponding place transmits the identification information of the corresponding user equipment 100 to the corresponding identification information colleting device 400 through the BLE communication scheme in response to the received identification information request signal.

As one example, the identification information collecting device 400 installed at the entrance of a cinema in the theater broadcasts the identification information request signal for requesting the identification information to an area in the entrance through the BLE communication scheme and receives (alternatively, collects) the identification information of the corresponding user equipment 100 transmitted from one or more user equipment 100 as a response thereto.

In the embodiment of the present invention, it is described that the identification information collecting device 400 collects the identification information of the user equipment 100 through the BLE communication scheme, but the present invention is not limited thereto and the identification information collecting device 400 may collect the identification information of the user equipment 100 by various communication schemes including infrared data association (IrDA), ultra wideband (UWB), ZigBee, near field communication (NFC), ultra sound communication (USC), visible light communication (VLC), Wi-Fi, Wi-Fi direct, and the like in addition to the BLE communication scheme (S440).

Thereafter, the identification information collecting device 400 transmits the collected identification information of one or more user equipment 100, the place information (alternatively, place specific identification information), the collection date and time information, the identification information of the identification information collecting device 400, and the like to the service providing device 200. In this case, the identification information collecting device 400 may transmit the collected identification information of one or more user equipment 100 arranged for each place/each date/each turn, and the like to the service providing device 200.

As one example, the identification information collecting device 400 transmits the collected identification information of 190 first to 190^{th} user equipment 100, the place information (for example, the ABCD theater), the collection date and time information (for example, 6 p.m. to 7:30 p.m. on January 11, 2015), the identification information of the identification information collecting device 400, and the like to the service providing device 200 (S450).

The service providing device 200 receives the identification information of one or more user equipment 100 transmitted from the identification information collecting device 400, the place information (alternatively, place specific identification information), the collection date and time information, the identification information of the identification information collecting device 400, and the like.

In addition, the service providing device 200 compares identification information of a plurality of (alternatively, one or more) user equipment which purchases the ticket in association with a prestored corresponding place and identification information of one or more user equipment transmitted from the identification information collecting device 400 to verify identification information (alternatively, identification information of the user equipment which does not enter the corresponding place/identification information of the user equipment in which a use date of the ticket and the time elapsed) of residual user equipment except for the identification information of one or more user equipment transmitted from the identification information collecting device 400 among corresponding prestored identification information of the plurality of user equipment.

That is, in order to verify the user equipment 100 which does not use the ticket purchased at the corresponding use date (alternatively, use turn) after purchasing the ticket, the service providing device 200 verifies the identification information of one or more user equipment in which the identification information of the plurality of user equipment corresponding to the collection date and time information of the corresponding place, which is prestored and the identification information of one or more user equipment transmitted from the identification information collecting device 400 overlap with each other. Further, the service providing device 200 verifies identification information of the residual user equipment except for the verified overlapped identification information of one or more user equipment among the identification information of the plurality of user equipment corresponding to the collection date and time information of the corresponding place which is prestored.

As one example, the service providing device 200 verifies identification information (alternatively, identification information of 200 user equipments which purchases the movie ticket played at 7 p.m. on January 11, 2015 corresponding to the corresponding collection date and time information) of 200 user equipments corresponding to the collection date and time information (for example, 6 p.m. to 7:30 p.m. on January 11, 2015) of the corresponding ABCD theater transmitted from the identification information collecting device 400 among the identification information of the plurality of user equipment for each place/each date/each turn which is prestored in the service providing device 200. Further, the service providing device 200 verifies identification information (for example, identification information of 10 191^{st} to 200^{th} user equipment) of user equipment which does not enter the corresponding ABCD theater, which is identification information of residual user equipment except for the identification information of 190 first to 190^{th} user equipment transmitted from the identification information collecting device 400 among the verified identification information of 200 user equipments (S460).

Thereafter, the service providing device 200 transmits the ticket cancel/change guide information to at least one user equipment 100 corresponding to the verified identification information of the user equipment which does not enter the corresponding place. Herein, the ticket cancel/change guide information includes a place name, place specific identification information, reservation date and time information, the number (alternatively, the quantity) of tickets, a total payment amount, payment date and time information, a payment card type, a cancel URL address for cancellation, a change URL address for changing the reservation date, and the like associated with the ticket purchased by the corresponding user equipment 100.

As one example, the service providing device 200 transmits the ticket cancel/change guide information to each of the 191^{st} to 200^{th} user equipment corresponding to the verified identification information of the 191^{st} to 200^{th} user equipment which does not enter the corresponding ABCD theater, respectively in order to see the movie played at 7 p.m. on January 11, 2015. In this case, the ticket cancel/change guide information to each of the 191^{st} to 200^{th} user equipment may include different information according to a history paid while the reservation in each user equipment.

That is, the service providing device 200 transmits to the 191^{st} user equipment the ticket cancel/change guide information including the theater name (for example, the ABCD theater) associated with two movie tickets purchased by the 191^{st} user equipment, the place specific identification information (for example, 001-002-003), the reservation date and time information (for example, 7 p.m. on January 11, 2015), the number of tickets (for example, 2 tickets), the seat information (for example, #11 and #12), the total payment amount (for example, 17,000 won), the payment date and time information (for example, 10:01:10 a.m. on January 7, 2015), the payment card type (for example, AA credit card), the cancel URL address, the change URL address, and the like(S470).

Thereafter, the user equipment 100 receives the ticket cancel/change guide information transmitted from the service providing device 200.

Further, the user equipment 100 displays the received ticket cancel/change guide information.

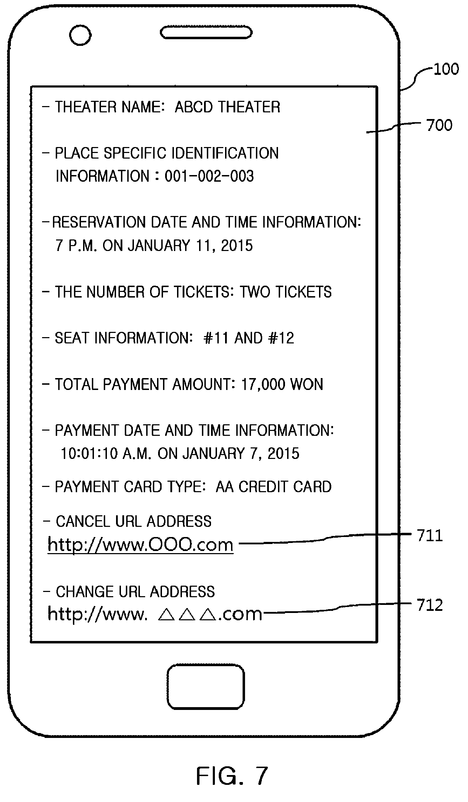

As one example, the 191^{st} user equipment 100 displays information 700 including the theater name (for example, ABCD theater), the place specific identification information (for example, 001-002-003), the reservation date and time information (for example, 7 p.m. on January 11, 2015), the number of tickets (for example, 2 tickets), the seat information (for example, #11 and #12), the total payment amount (for example, 17,000 won), the payment date and time information (for example, 10:01:10 a.m. on January 7, 2015), the payment card type (for example, AA credit card), the cancel URL address, the change URL address, and the like transmitted form the service providing device 200 when the user of the 191^{st} user equipment does not visit the corresponding ABCD theater (alternatively, when the use date and time/see date and time for the movie ticket reserved by the user of the 191^{st} user equipment elapsed) in order to see the reserved (alternatively, paid) movie as illustrated in FIG. 7 (S480).

Thereafter, when the cancel URL address is selected among the ticket cancel/change guide information displayed on the user equipment 100, the user equipment 100 accesses the ticket cancel site corresponding to the corresponding cancel URL address provided (alternatively, managed) by the corresponding service providing device 200.

Further, the user equipment 100 displays the user interface screen for the ticket cancellation provided by the corresponding ticket cancel site.

As one example, when the cancel URL address 712 displayed in FIG. 7 is selected, the user equipment 100 accesses the ticket cancel site corresponding to the corresponding cancel URL address and displays the user interface screen for cancelling the movie ticket provided by the corresponding ticket cancel site (S490).

Thereafter, the user equipment 100 performs the ticket cancel function for a ticket to be cancelled by interlocking with the service providing device 200 and the payment server 300. In this case, the user equipment 100 may transmit the identification information of the corresponding user equipment 100, and the like to the service providing device 200 in the background state.

That is, when there is an unused ticket among one or more tickets purchased (alternatively, reserved) by the corresponding user equipment 100 as described above, the user equipment 100 performs the ticket cancel function for an associated ticket which needs to be cancelled by interlocking with the service providing device 200 and the payment server 300.

As one example, the user equipment 100 performs a user authentication (alternatively, own authentication, verification of member joining or not, and log-in execution) function by interlocking with the service providing device 200 based on the user interface screen for cancelling the movie ticket. Further, after the user authentication is normally executed, the user equipment 100 executes the ticket cancel function (alternatively, a payment amount cancel/return function) for two tickets at 7 p.m. on January 11, 2015 in the ABCD theater, which is purchased by interlocking with the service providing device 200 and the payment server 300 (S500).

Thereafter, the user equipment 100 receives the ticket cancel function execution result transmitted from the service providing device 200 or the payment server 300. Herein, the ticket cancel function execution result (alternatively, ticket cancel information) includes a place name, place specific identification information, reservation date and time information, the number (alternatively, the quantity) of tickets, a total payment amount, payment date and time information, a payment card type, a payment cancel amount, payment cancel date and time information, refund scheme information, and the like. In this case, the refund scheme information includes cancellation for a payment card to perform payment, refund to a deposit/point, deposit in a designated account, and the like.

Further, the user equipment 100 displays the received ticket cancel function execution result.

In addition, the service providing device 200 stores (alternatively, manages) the ticket cancel function execution result for each identification information of the user equipment.

That is, the service providing device 200 stores the ticket cancel function execution result for the identification information of the corresponding user equipment which cancels the ticket for each place (alternatively, store) in which the corresponding ticket is used.

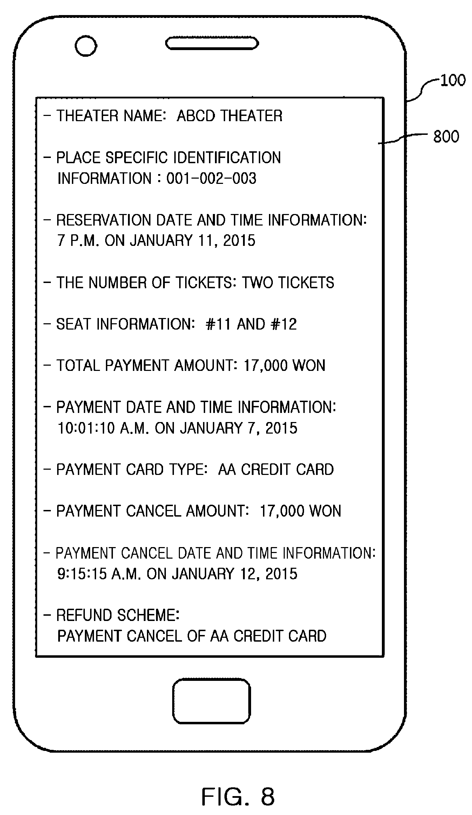

As one example, the cancel function for a movie ticket of which a ticket use date elapsed is normally executed in the corresponding 191^{st} user equipment 100 by interlocking with the 191^{st} user equipment, the service providing device 200, and the payment server 300, the 191^{st} user equipment 100 displays information 800 including the theater name (for example, ABCD theater), the place specific identification information (for example, 001-002-003), the reservation date and time information (for example, 7 p.m. on January 11, 2015), the number of tickets (for example, 2 tickets), the seat information (for example, #11 and #12), the total payment amount (for example, 17,000 won), the payment date and time information (for example, 10:01:10 a.m. on January 7, 2015), the payment card type (for example, AA credit card), the payment cancel amount (for example, 17,000 won), the payment cancel date and time information (for example, 9:15:15 a.m. on January 12, 2015), the refund scheme information (for example, payment cancellation of the AA credit card), and the like transmitted from the service providing device 200 as illustrated in FIG. 8 (S510).

Thereafter, when the change URL address is selected among the ticket cancel/change guide information displayed on the user equipment 100, the user equipment 100 accesses the ticket change site corresponding to the change URL address provided (alternatively, managed) by the corresponding service providing device 200.

Further, the user equipment 100 displays the user interface screen for changing the ticket reservation date provided by the corresponding ticket change site.

As one example, when the change URL address 712 displayed in FIG. 7 is selected, the user equipment 100 accesses the ticket change site corresponding to the corresponding change URL address and displays the user interface screen for changing the reservation date of the movie ticket provided by the corresponding ticket change site (S520).

Thereafter, the user equipment 100 performs the ticket reservation date change function for a ticket of which the reservation date is intended to be changed by interlocking with the service providing device 200. In this case, the user equipment 100 may transmit the identification information of the corresponding user equipment 100, and the like to the service providing device 200 in the background state.

That is, when there is the unused ticket among one or more tickets purchased (alternatively, reserved) by the corresponding user equipment 100 as described above, the user equipment 100 performs the ticket reservation date change function for the associated ticket of which the reservation date is required by interlocking with the service providing device 200. In this case, when the ticket reservation date change function is executed, the corresponding user equipment 100 may additionally pay a predetermined fee.

As one example, the user equipment 100 performs a user authentication (alternatively, own authentication, verification of member joining or not, and log-in execution) function by interlocking with the service providing device 200 based on the user interface screen for changing the reservation date of the movie ticket. Further, after the user authentication is normally executed, the user equipment 100 executes the ticket reservation date change function (for example, a function to change the reservation date to a play date of 7 p.m. on January 18, 2015 with respect to two tickets at the play date of 7 p.m. on January 11, 2015 in the related art) for two tickets at 7 p.m. on January 11, 2015 in the ABCD theater which are purchased as above by interlocking with the service providing device 200 (S530).

Thereafter, the user equipment 100 receives the ticket reservation date change function execution result transmitted from the service providing device 200. Herein, the ticket reservation date change function execution result (alternatively, ticket reservation date change information) includes a place name, place specific identification information, reservation date and time information, the number (alternatively, the quantity) of tickets, a total payment amount, payment date and time information, a payment card type, change reservation date and time information, change date information, and the like.

Further, the user equipment 100 displays the received ticket reservation date change function execution result.

In addition, the service providing device 200 stores (alternatively, manages) the ticket reservation date change function execution result for each identification information of the user equipment.

That is, the service providing device 200 stores the ticket cancel function execution result for the identification information of the corresponding user equipment which changes the reservation date of the ticket for each place (alternatively, store) in which the corresponding ticket is used.

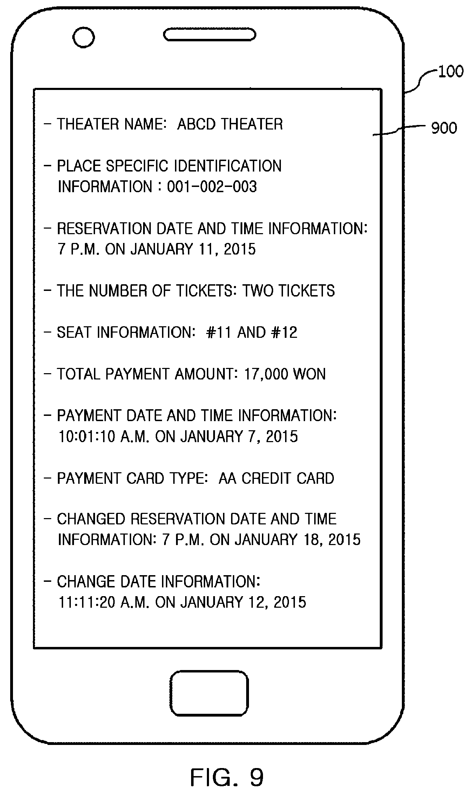

As one example, the reservation date change function for the movie ticket of which the ticket use date elapsed is normally executed in the corresponding 191^{st} user equipment 100 by interlocking with the 191^{st} user equipment and the service providing device 200, the 191^{st} user equipment 100 displays information 900 including the theater name (for example, ABCD theater), the place specific identification information (for example, 001-002-003), the reservation date and time information (for example, 7 p.m. on January 11, 2015), the number of tickets (for example, 2 tickets), the seat information (for example, #11 and #12), the total payment amount (for example, 17,000 won), the payment date and time information (for example, 10:01:10 a.m. on January 7, 2015), the payment card type (for example, AA credit card), the changed reservation date and time information (for example, 7 p.m. on January 18, 2015), the change date information (for example, 11:11:20 a.m. on January 12, 2015), and the like transmitted from the service providing device 200 as illustrated in FIG. 9 (S540).

The service providing device for cancelling the ticket and the ticket cancel guide system including the same according to the embodiment of the present invention may be prepared with a computer program, and codes and code segments configuring the computer program may easily deduced by a computer programmer in the art. Further, the corresponding computer program is stored in a non-transitory computer readable storage medium, and read and executed by the user equipment, the service providing device, the payment server, the identification information collecting device, and the like according to the embodiment of the present invention to implement the service providing device for the cancelling the ticket and the ticket cancel guide system including the same.

The non-transitory computer readable storage medium includes a magnetic storage medium, an optical storage medium, and a carrier wave medium. The computer program that implements the service providing device for the cancelling the ticket and the ticket cancel guide system including the same according to the embodiment of the present invention may be stored and installed in embedded memories of the user equipment, the service providing device, the payment server, the identification information collecting device, and the like. Alternatively, external memories of a smart card and the like which store and install the computer program implementing the service providing device for the cancelling the ticket and the ticket cancel guide system including the same according to the embodiment of the present invention may be installed in the user equipment, the service providing device, the payment server, the identification information collecting device, and the like through an interface.

In the embodiment of the present invention, as described above, identification information of one or more user equipment which does not enter the place associated with the ticket is verified, ticket cancel guide information is transmitted to the corresponding user equipment corresponding to the verified identification information of at least one user equipment which does not enter the corresponding place, and a cancel procedure is performed by interlocking with the service providing device and a payment server based on the ticket cancel guide information in the corresponding user equipment, and as a result, a ticket cancel function is provided to a customer who does not enter the corresponding place through easy cancel guide information and an easy menu, thereby increasing convenience of a user.

Hereinabove, although the present invention is described by specific matters such as concrete components, and the like, embodiments, and drawings, they are provided only for assisting in the entire understanding of the present invention. Therefore, the present invention is not limited to the embodiments. Various modifications and changes may be made by those skilled in the art to which the present invention pertains from this description. Therefore, the spirit of the present invention should not be limited to the above-described embodiments and the following claims as well as all modified equally or equivalently to the claims are intended to fall within the scope and spirit of the invention.

According to the present invention, identification information of at least one user equipment which does not enter the place associated with the ticket is verified, ticket cancel guide information is transmitted to the corresponding user equipment corresponding to the verified identification information of at least one user equipment which does not enter the corresponding place, and a cancel procedure is performed by interlocking with the service providing device and a payment server based on the ticket cancel guide information in the corresponding user equipment, and as a result, a ticket cancel function is provided to a customer who does not enter the corresponding place through easy cancel guide information and an easy menu, thereby increasing convenience of a user and the present invention can be widely used in a ticket reservation/payment field, a service providing device field, a user equipment field, a payment server field, and the like.

## Claims

1. A service providing device comprising:
a communication unit receiving identification information of one or more user equipment, collection date and time information, place information, and identification information of an identification information collecting device collected with respect to user equipment which enters a place at which the identification information collecting device is positioned, which are transmitted from the identification information collecting device;
a storage unit storing identification information of a plurality of user equipment which purchases a ticket in association with the place; and
a control unit verifying the identification information of one or more user equipment in which the identification information of the plurality of user equipment corresponding to the place information and the collection date and time information prestored in the storage unit and the identification information of one or more user equipment transmitted from the identification information collecting device overlap with each other, verifying identification information of the residual user equipment except for the verified overlapped identification information of one or more user equipment among the identification information of the plurality of user equipment corresponding to the place information and the collection date and time information of the corresponding place prestored in the storage unit, and controlling the communication unit to transmit the ticket cancel/change guide information to be transmitted to each of at least one user equipment corresponding to the verified identification information of the user equipment which does not enter the place.

2. The service providing device of claim 1, wherein the ticket cancel/change guide information includes at least one of a place name, place specific identification information, reservation date and time information, the number of tickets, a total payment amount, payment date and time information, a payment card type, a cancel URL address for cancellation, and a change URL address for changing a reservation date associated with the ticket purchased by the user equipment.

3. The service providing device of claim 2, wherein when the cancel URL address is selected by the user equipment in the ticket cancel/change guide information transmitted to the user equipment, the control unit performs a ticket cancel function for the ticket purchased by the user equipment by interlocking with the user equipment and a payment server.

4. The service providing device of claim 2, wherein when the change URL address is selected by the user equipment in the ticket cancel/change guide information transmitted to the user equipment, the control unit performs a ticket reservation date change function for the ticket purchased by the user equipment by interlocking with the user equipment.

5. A control method of a service providing device, comprising:
receiving, by a communication unit, identification information of one or more user equipment, collection date and time information, place information, and identification information of an identification information collecting device collected with respect to user equipment which enters a place at which the identification information collecting device is positioned, which are transmitted from the identification information collecting device;
verifying, by a control unit, at least one user equipment which does not use a ticket purchased at a use date after purchasing the ticket in association with the place based on the received identification information of one or more user equipment, place information, and collection date and time information;
generating, by the control unit, ticket cancel/change guide information corresponding to the verified user equipment which does not use the ticket purchased at the use date; and
transmitting, by the communication unit, the generated ticket cancel/change guide information to the verified user equipment which does not use the ticket purchased at the use date.

6. The method of claim 5, wherein:
the verifying of at least one user equipment which does not use the ticket purchased at the use date after purchasing the ticket includes:
verifying, by the control unit, the identification information of one or more user equipment in which the identification information of the plurality of user equipment corresponding to the place information and the collection date and time information prestored in the storage unit and the identification information of one or more user equipment transmitted from the identification information collecting device overlap with each other; and
verifying, by the control unit, identification information of the residual user equipment except for the verified overlapped identification information of one or more user equipment among the identification information of the plurality of user equipment corresponding to the place information and the collection date and time information of the corresponding place prestored in the storage unit.

7. The method of claim 5, further comprising:
performing, by the control unit, when a cancel URL address is selected by the user equipment in the ticket cancel/change guide information, a ticket cancel function for the ticket purchased by the user equipment by interlocking with the user equipment and a payment server; and
transmitting, by the communication unit, a ticket cancel function execution result.

8. The method of claim 7, wherein the ticket cancel function execution result includes at least one of a place name, place specific identification information, reservation date and time information, the number of tickets, a total payment amount, payment date and time information, a payment card type, payment cancel date and time information, a payment cancel amount, and refund scheme information.

9. The method of claim 5, further comprising:
performing, by the control unit, when a change URL address for changing a reservation date in the ticket cancel/change guide information is selected by the user equipment, a ticket reservation date change function for the ticket purchased by the user equipment by interlocking with the user equipment; and
transmitting, by the communication unit, a ticket reservation date change function execution result,
wherein the ticket reservation date change function execution result includes at least one of a place name, place specific identification information, reservation date and time information, the number of tickets, a total payment amount, payment date and time information, a payment card type, change date information, and changed reservation date and time information.

10. A non-transitory computer readable storage medium having a computer program recorded thereon configured to perform the method of any one of claims 5 to 9.

11. A ticket cancel guide system for cancelling a ticket, comprising:
an identification information collecting device providing identification information of one or more user equipment, collection date and time information, place information, and identification information of the identification information collecting device collected with respect to user equipment which enters a place at which an identification information collecting device is positioned;
a service providing device verifying the identification information of one or more user equipment in which the identification information of the plurality of user equipment corresponding to the place information and the collection date and time information which are prestored and the identification information of one or more user equipment transmitted from the identification information collecting device overlap with each other, verifying identification information of the residual user equipment except for the verified overlapped identification information of one or more user equipment among the identification information of the plurality of user equipment corresponding to the place information and the collection date and time information which are prestored, and transmitting the ticket cancel/change guide information to at least one user equipment corresponding to the verified identification information of the user equipment which does not enter the place;
a payment server performing a payment function or performing a payment function cancel function; and
user equipment performing, when a cancel URL address included in the ticket cancel/change guide information is selected, a ticket cancel function for a purchased ticket by interlocking with the service providing device and the payment server.
